# EUROPEAN PATENT SPECIFICATION

(11) **EP 4 461 633 B1**
(45) Date of publication and mention of the grant of the patent: **19.11.2025**
(21) Application number: 23173183.7
(22) Date of filing: 12.05.2023
(51) Int. Cl.: B63H 9/061, B63H 9/02, B63B 15/00

(54) **WIND PROPULSION SYSTEM AND MARINE VESSEL**
WINDANTRIEBSSYSTEM UND WASSERFAHRZEUG
SYSTÈME DE PROPULSION ÉOLIENNE ET NAVIRE

(43) Date of publication of application: 13.11.2024
(73) Proprietor: AlfaWall Oceanbird AB, 141 49 Huddinge (SE)
(72) Inventor: ROOS, Fredrik, 141 71 Segeltorp (SE); BENGTSSON EDSTRÖM, Annika, 135 63 Tyresö (SE); FIEBER, Andreas, 113 32 Stockholm (SE)
(74) Representative: Alfa Laval Attorneys

(56) References cited:
- EP-A2- 0 096 329
- IT-A1- TO20 010 910
- JP-A- 2016 000 617
- US-B2- 9 376 187

## Description

### TECHNICAL FIELD

The disclosure relates to a wind propulsion system and to a marine vessel.

### BACKGROUND

Sails have been known for a long time as means for propelling ships. Traditionally, flexible sails made from fabric have been mounted on masts to harness the power of wind and propel the ship.

Modern marine vessels commonly use fossil fuels and combustion engines to propel the vessel. Use of wind propulsion has been suggested to reduce the overall consumption of fossil fuels. For this purpose, one or more wind engagement units can be used. Other than common flexible sheet-formed sails, such wind engagement units may comprise rigid or flexible sails of various kinds, such as wingsails, rotor sails, wind turbines, or similar means. The amount of propulsive power being generated by wind engagement units is related to a number of interlinked factors, but wind engagement area of a wind engagement unit, that is area of the wind engagement unit that engages the wind in a manner to provide propulsive forces to the vessel and which is thus exposed to wind loads, and other geometric and aerodynamic characteristics are primary performance indicators.

For the purpose of controlling the propulsive power generated, one or more aspects of the wind engagement unit may be controllable. Some wind engagement units may be controllable between an active position or an inactive position. In the active position, the wind engagement unit generates propulsive power. In the inactive position of the wind engagement unit, no propulsive power is generated or at least the propulsive power generated is largely reduced.

For instance, wind engagement units comprising rigid sails of various kinds or rotor sails may be tilted from an upright position. In the upright position, wind engagement unit can be in the active position and when fully tilted, the wind engagement unit is in its inactive position.

A control arrangement including e.g., hydraulically powered actuators may be arranged for controlling aspects of a wind engagement unit, including tilting thereof.

Documents US 9376187 B2 and IT TO20010910 A1 constitute relevant prior art.

### SUMMARY

Aboard some marine vessels, a safety measure to be taken may be a tilting of a wind engagement unit of a wind propulsion system. For instance, strong winds may require for the wind engagement unit to be placed in its tilted inactive position to ensure safe traveling of the marine vessel. Also, passage underneath bridges may require tilting of the wind engagement unit.

It would be advantageous to achieve a wind propulsion system comprising a wind engagement unit that ensures tilting of the wind engagement unit. In particular, it would be desirable to enable tilting of a wind engagement unit of a wind propulsion system even if a main control arrangement of the wind propulsion system should malfunction. To better address one or more of these concerns, one or more of a wind propulsion system and a marine vessel having the features defined in one or more of the independent claims is provided.

According to an aspect, there is provided a wind propulsion system comprising a wind engagement unit, a first hydraulic actuator arranged for generating a first tilt force for tilting the wind engagement unit, and a main hydraulic control arrangement for controlling the first hydraulic actuator. The first hydraulic actuator comprises a first pressure chamber for receiving hydraulic fluid to generate the first tilt force and a second pressure chamber for receiving hydraulic fluid to generate a force opposing the first tilt force. The main hydraulic control arrangement is configured for directing hydraulic fluid to and from the first and second pressure chambers. The wind propulsion system further comprises a bypass arrangement connected to the second pressure chamber, the bypass arrangement being separate from the main hydraulic control arrangement. The wind propulsion system is configured for tilting of the wind engagement unit utilising a second tilt force which is generated independently of the main hydraulic control arrangement. The bypass arrangement is configured for conducting hydraulic fluid from the second pressure chamber when tilting the wind engagement unit utilising the second tilt force.

Since the wind propulsion system comprises the bypass arrangement connected to the second pressure chamber, since the bypass arrangement is separate from the main hydraulic control arrangement, since the wind propulsion system is configured for tilting of the wind engagement unit utilising a second tilt force which is generated independently of the main hydraulic control arrangement, and since the bypass arrangement is configured for conducting hydraulic fluid from the second pressure chamber when tilting the wind engagement unit utilising the second tilt force - the wind engagement unit is tiltable independently of the main hydraulic control arrangement. Accordingly, the wind engagement unit is tiltable even if the main hydraulic control arrangement should malfunction.

More specifically, since the bypass arrangement is separate from the main hydraulic control arrangement and configured for conducting hydraulic fluid from the second pressure chamber, should the main hydraulic control arrangement malfunction, hydraulic fluid can be conducted from the second pressure chamber when the second tilt force is utilised for tilting the wind engagement unit. The main hydraulic control arrangement thus, is not required for conducting hydraulic fluid from the second pressure chamber.

According to a further aspect there is provided a marine vessel comprising a wind propulsion system according to any one of aspects and/or embodiments discussed herein.

Consequently, the wind engagement unit of the wind propulsion system comprised in the marine vessel is tiltable even if the main hydraulic control arrangement should malfunction, as discussed above.

The wind propulsion system is configured for at least contributing to the propulsion of a marine vessel, on which the wind propulsion system is mounted. The marine vessel, herein alternatively referred to as a/the vessel, may typically be a vessel used in seabound transport of goods and/or passengers. However, the marine vessel alternatively may be a leisure yacht.

The wind propulsion system may herein alternatively be referred to as the propulsion system.

As mentioned above, the wind propulsion system comprises the wind engagement unit i.e., a unit adapted for engagement with wind in order to propel the marine vessel.

According to embodiments, the wind engagement unit may comprise or consist of a wingsail, a rotor sail, a turbo sail, or similar device. That is, the wind engagement unit is of a kind comprising one or more rigid components, such as supporting structures, masts and/or sails in itself, and which may require to be tilted in certain situations.

The first hydraulic actuator is arranged for tilting the wind engagement unit under the control of the main first hydraulic actuator. In a fully tilted position, the wind engagement unit is inactive and does not contribute, or only contributes to a limited degree, to propelling the vessel. Also, the first hydraulic actuator may be arranged for raising the wind engagement unit to an upright position. In the upright position, the wind engagement unit may be active and contribute to propelling the vessel, and some wind engagement units may also be inactive when upright by being arranged in a non-propelling configuration. The latter may be possible e.g., for a wingsail.

When hydraulic fluid is directed to the first pressure chamber of the first hydraulic actuator by the main hydraulic control arrangement, the first hydraulic actuator generates the first tilt force.

The force opposing the first tilt force may be a force for raising the wind engagement unit. Accordingly, when hydraulic fluid is directed to the second pressure chamber of the first hydraulic actuator by the main hydraulic control arrangement, the first hydraulic actuator generates the force opposing the first tilt force i.e., the force for raising the wind engagement unit.

The wind propulsion system may comprise more than one first hydraulic actuator for tilting and raising the wind engagement unit.

As mentioned above, the main hydraulic control arrangement is configured for directing hydraulic fluid to and from the first and second pressure chambers. This means that the main hydraulic control arrangement may comprise one or more of a hydraulic pump, flow controlling valves, control logic, etc.

Under ordinary operating conditions, the main hydraulic control arrangement effectuates the tilting and raising of the wind engagement unit.

The main hydraulic control arrangement may comprise a user interface or may communicate with a user interface. Via the user interface, personnel aboard the marine vessel provides input to the main hydraulic control arrangement for tilting and raising the wind engagement unit.

The main hydraulic control arrangement may control further aspects of the wind engagement unit and/or of the wind propulsion system.

The bypass arrangement being separate from the main hydraulic control arrangement means that hydraulic fluid can be conducted therethrough from the second pressure chamber separately from the main hydraulic control arrangement. Put differently, flow of hydraulic fluid through the bypass arrangement is independent of the main hydraulic control arrangement. The main hydraulic control arrangement does not control flow of hydraulic fluid through the bypass arrangement.

Thus, in case the main hydraulic control arrangement should malfunction, tilting of the wind engagement unit by the second tilt force is executable since hydraulic fluid can be conducted from the second pressure chamber via the bypass arrangement. Namely, in order to tilt the wind engagement unit, hydraulic fluid within the second pressure chamber of the first hydraulic actuator has to be lead therefrom.

One or more hydraulic fluid conduits may be shared by the bypass arrangement and the main hydraulic control arrangement but hydraulic fluid flow controlling devices of the bypass arrangement are separate from hydraulic fluid flow controlling devices of the main hydraulic control arrangement.

As mentioned above, the second tilt force is generated independently of the main hydraulic control arrangement. For instance, the second tilt force may comprise a force component generated by natural forces e.g., gravity, aerodynamic forces such as forces caused by wind or headwind, vessel movement caused by waves, etc. The second tilt force may comprise a force component generated hydraulically or mechanically e.g., by a hydraulic pump separate from the main hydraulic control arrangement, by a hydraulic or mechanical jack, or by a winch.

Accordingly, in some embodiments the second tilt force may be generated independently of the first hydraulic actuator. In other embodiments the second tilt force may be generated at least partially by the first hydraulic actuator however, still independently of the main hydraulic control arrangement.

The wind engagement unit or at least a portion thereof may be moveable besides being tiltable. For instance, the wind propulsion system may comprise a base and the wind engagement unit or a portion thereof may be displaceable in relation to the base. For instance, the wind engagement unit or a movable portion thereof may be displaceable in relation to the base for controlling a direction and/or a magnitude of a propulsive force produced by the wind engagement unit. Such displacement in relation to the base may also be controlled by the main hydraulic control arrangement.

The wind engagement unit may comprise a wingsail, wherein the wingsail may comprise a main wingsail having an aerofoil shape and a flap having an aerofoil shape. Optionally, the wingsail may have more than one flap.

In such embodiments, the first hydraulic actuator controls a tilting of the entire wingsail.

A further hydraulic actuator may be provided for controlling a position of the flap in relation to the main wingsail. Such further hydraulic actuator may be controlled by the main hydraulic control arrangement.

Such a further hydraulic actuator may be e.g., a hydraulic cylinder or a hydraulic motor.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Figs. 1a and 1b illustrates a marine vessel according to embodiments,
Fig. 2 schematically illustrates a portion of a wind propulsion system according to embodiments, and
Fig. 3a - 3d schematically illustrate a top view of a wind engagement unit.

### DETAILED DESCRIPTION

Aspects and/or embodiments of the invention will now be described more fully. Like numbers refer to like elements throughout. Well-known functions or constructions will not necessarily be described in detail for brevity and/or clarity.

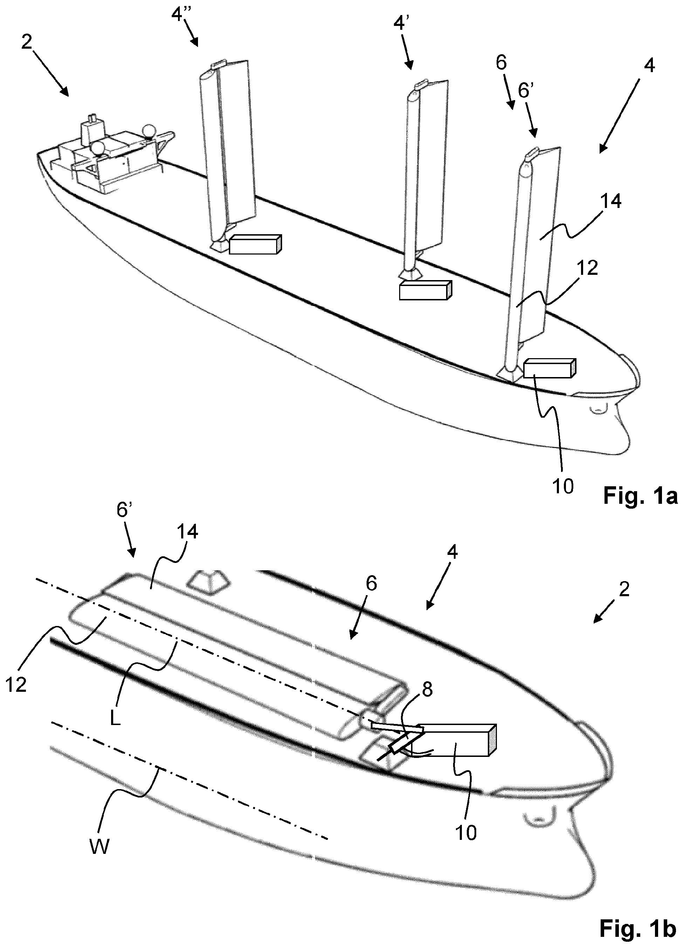

**Figs. 1a and 1b** illustrates a marine vessel 2 according to embodiments. In **Fig. 1b****,** a bow end portion of the vessel 2 is shown.

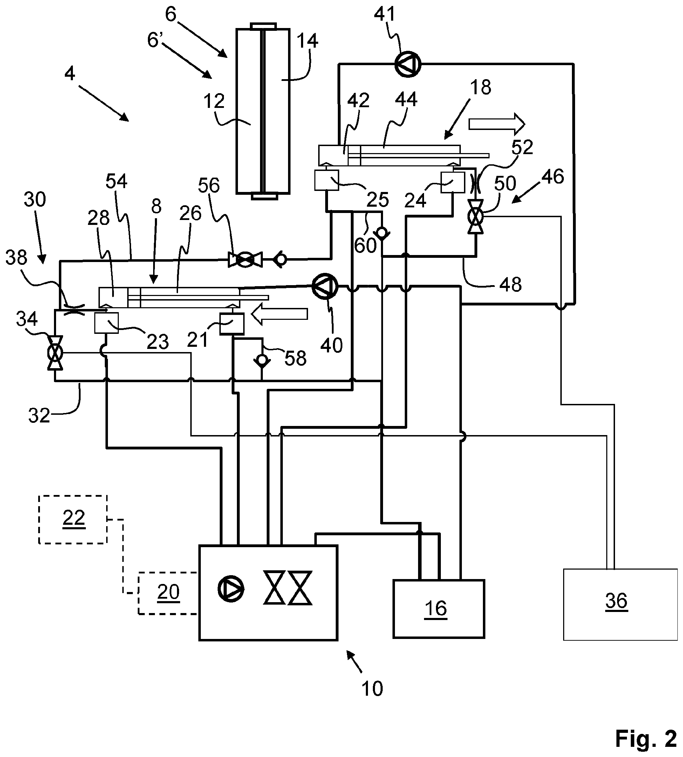

The marine vessel 2 comprises a wind propulsion system 4 according to any one of aspects and/or embodiments discussed herein, inter alia with reference to **Figs. 2** - **4.**

The vessel 2 may comprise more than one wind propulsion system. In the illustrated embodiments, the vessel 2 comprises three wind propulsion systems 4, 4', 4". The wind propulsion systems 4, 4', 4" may be of similar kinds or of different kinds.

The marine vessel 2 may comprise less than three, such as one or two wind propulsion systems or more than three, such as within a range of 4 - 12, wind propulsion systems.

The wind propulsion system 4 comprises a wind engagement unit 6, a first hydraulic actuator 8 (see **Fig. 1b****),** and a main hydraulic control arrangement 10 for controlling the first hydraulic actuator 8. The first hydraulic actuator 8 is arranged for generating a first tilt force for tilting the wind engagement unit 6. The first tilt force is generated by the first hydraulic actuator 8 under control of the main hydraulic control arrangement 10.

The wind engagement unit 6 is arranged at a deck structure of the vessel 2.

The main hydraulic control arrangement 10 is schematically indicated in **Figs. 1a and 1b****.** The first hydraulic actuator 8 and the main hydraulic control arrangement 10 are discussed in further detail below with reference to **Fig. 2****.**

In **Fig. 1a** the wind engagement unit 6 is shown in an upright or raised position. The upright or raised position of the wind engagement unit 6 can be an active position, in which the wind engagement unit 6 is positioned to contribute to propelling the marine vessel 2. According to some embodiments, the wind engagement unit 6 may be arranged to be inactive i.e., not to contribute to the propulsion of the vessel 2, also in the upright position.

In **Fig. 1b** the wind engagement unit 6 is shown in a tilted position. The tilted position may be a substantially horizontal position or it may be a position substantially parallel with the extension of the body or deck of the vessel. The tilted position of the wind engagement unit 6 is an inactive position, in which the wind engagement unit 6 does not contribute to propelling the vessel 2, at least not to any large extent.

The substantially horizontal position may be a position wherein, seen projected on a vertical plane extending between bow and stern of the vessel 2, a longitudinal axis L of the wind engagement 6 is arranged at an angel within a range of +/- 15 degrees to a waterline W of the marine vessel 2.

The wind propulsion system 4 is configured for tilting of the wind engagement unit 6 utilising a second tilt force which is generated independently of the main hydraulic control arrangement 10.

In the illustrated embodiments, the wind engagement unit 6 is a wingsail 6'. However, according to alternative embodiments, the wind engagement unit 6 may be a rotor sail, a turbo sail, or similar device comprising one or more rigid components, which are tiltable by a first hydraulic actuator.

A rotor sail may utilise the so-called Magnus effect and may e.g., comprise a Flettner rotor. A turbo sail may sometimes be referred to as a suction sail. Other similar devices may e.g., comprise a wind turbine.

The wingsail 6' comprises a main wingsail 12 having an aerofoil shape and a flap 14 having an aerofoil shape.

Accordingly, in some embodiments, such as in the illustrated embodiments, the wind engagement unit 6 may comprises a main member 12 and an auxiliary member 14. The wind propulsion system 4 comprises a second hydraulic actuator, see below with reference to **Fig. 2****,** arranged for generating a first movement force for moving the auxiliary member 14 in relation to the main member 12.

The main hydraulic control arrangement 10 is arranged for controlling the second hydraulic actuator. For instance, the main hydraulic control arrangement 10 is configured for controlling the second hydraulic actuator for generating the first movement force.

The wind propulsion system 4 is configured for movement of the auxiliary member 14 in relation to the main member 12 utilising a second movement force generated independently of the main hydraulic control arrangement 10.

The first hydraulic actuator 8 controls a tilting of the entire wingsail 6' i.e., including the main member / main wingsail 12 and the auxiliary member / flap 14.

**Fig. 2** schematically illustrates a portion of a wind propulsion system 4 according to embodiments.

The wind propulsion system 4 of the **Fig. 2** embodiments resembles in much the wind propulsion system 4 of the **Figs. 1a and 1b** embodiments. Accordingly, reference is also made to the above discussion of the **Figs. 1a and 1b** embodiments.

Again, the propulsion system 4 may be comprised in a marine vessel.

Again, the wind propulsion system 4 comprises a wind engagement unit 6, a first hydraulic actuator 8, and a main hydraulic control arrangement 10 for controlling the first hydraulic actuator 8. The first hydraulic actuator 8 is arranged for generating a first tilt force for tilting the wind engagement unit 6 under the control of the main hydraulic control arrangement 10.

The first hydraulic actuator 8 may be a hydraulic cylinder. As such, tilting systems for tilting a wind engagement unit, which tilting systems including a hydraulic actuator are known. Accordingly, herein, a detailed discussion of further components of the tilting system is not necessary.

Again, the wind propulsion system 4 is configured for tilting of the wind engagement unit 6 utilising a second tilt force which is generated independently of the main hydraulic control arrangement 10.

Again, the wind engagement unit 6 comprises a main member 12 and an auxiliary member 14 and a second hydraulic actuator 18 generating a first movement force for moving the auxiliary member 14 in relation to the main member 12 under the control of the main hydraulic control arrangement 10.

A tank 16 is provided for receiving and supplying hydraulic fluid to hydraulic components of the propulsion system 4.

The main hydraulic control arrangement 10 comprises various hydraulic components, such as at least a hydraulic pump, valves for controlling flow of hydraulic fluid to and from the first and second hydraulic actuators 8, 18, and electronic control logic 20 for controlling the various hydraulic components.

The hydraulic pump pressurises a hydraulic fluid, such as hydraulic oil, which under control of the valves is directed through the main hydraulic control arrangement 10 to and from the first and second hydraulic actuators 8, 18.

The valves for controlling flow of hydraulic fluid may include so-called counter balance valves 21, 23, 24, 25 or other corresponding load holding hydraulic arrangements configured for maintaining a backpressure at the hydraulic fluid lines leading to and from the first and second actuators 8, 18 to prevent losing control over the load on the hydraulic actuators i.e., to maintain a set position of the wind engagement unit 6 and/or the auxiliary member 14 during use of the propulsion system 4.

The electronic control logic 20 comprises one or more calculation units which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression calculation unit may represent a processing circuitry comprising a plurality of processing circuits, such as, e.g., any, some or all of the ones mentioned above. The electronic control logic 20 may comprise a memory unit. The calculation unit is connected to the memory unit, which provides the calculation unit with, for example, the stored programme code and/or stored data which the calculation unit needs to enable it to do calculations. The calculation unit also may be adapted to storing partial or final results of calculations in the memory unit. The memory unit may comprise a physical device utilised to store data or programs, i.e., sequences of instructions, on a temporary or permanent basis.

The electronic control logic 20 is connected (not shown) inter alia to the valves for controlling flow of hydraulic fluid to and from the first and second hydraulic actuators 8, 18. The electronic control logic 20 may comprise or communicate with a user interface 22. The user interface 22 may be arranged at a bridge of the marine vessel for staff to control the wind propulsion system 4. The electronic control logic 20 and/or the user interface 22 may be connected to a remote control via satellite, mobile network or internet connection.

More specifically, the first hydraulic actuator 8 comprises a first pressure chamber 26 for receiving hydraulic fluid to generate the first tilt force and a second pressure chamber 28 for receiving hydraulic fluid to generate a force opposing the first tilt force. The main hydraulic control arrangement 10 is configured for directing hydraulic fluid to and from the first and second pressure chambers 26, 28.

The direction of the first tilt force is indicated with a broad arrow at the first hydraulic actuator 8. According to some embodiments, also the second tilt force is in the direction of the broad arrow.

When applied, each of the first and second tilt forces causes the wind engagement unit 6 to be tilted. Upon tilting the wind engagement unit 6, hydraulic fluid has to be let out of the second pressure chamber 28.

When the first tilt force is generated by the first hydraulic actuator 8 under control of the main hydraulic control arrangement 10, the main hydraulic control arrangement 10 also controls the relevant counter balance valve 23 for letting out hydraulic fluid from the second pressure chamber 28, either directly or indirectly by initiating a pressure difference, depending on the type of counter balance valve.

The wind propulsion system 4 further comprises a bypass arrangement 30 connected to the second pressure chamber 28. The bypass arrangement 30 is separate from the main hydraulic control arrangement 10.

Specifically, the bypass arrangement 30 bypasses at least the counter balance valve 23 or other load holding hydraulic arrangement of the main hydraulic control arrangement 10 connected to the second pressure chamber 28.

The bypass arrangement 30 is configured for conducting hydraulic fluid from the second pressure chamber 28 when tilting the wind engagement unit 6 utilising the second tilt force which is generated independently of the main hydraulic control arrangement 10.

The wind propulsion system 4 may comprise additional hydraulic tilt actuators for tilting the wind engagement unit 6. Such additional hydraulic tilt actuators may be controlled in a manner similar to that discussed herein with reference to the first hydraulic actuator 8.

As opposed to the illustrated embodiments, an alternative first hydraulic actuator may be extended for tilting the wind engagement unit and contracted for raising the wind engagement unit 6. In such embodiments, the bypass arrangement 30 will function in a corresponding manner.

According to some embodiments, such as the illustrated embodiments, the bypass arrangement 30 comprises a hydraulic passage 32 connecting the second pressure chamber 28 with a tank 16 for hydraulic fluid and a controllable valve 34 arranged in the hydraulic passage 32, wherein the controllable valve 34 is configured for closing and opening the hydraulic passage 32. In this manner, the bypass arrangement 30 may be configured for conducting hydraulic fluid from the second pressure chamber 28 when tilting the wind engagement unit 6 utilising the second tilt force.

The controllable valve 34 is controllable independently of the main hydraulic control arrangement 10.

The controllable valve 34 may be manually controlled e.g., by turning a lever or turning a knob. Alternatively, as illustrated, the controllable valve 34 may be controlled via an autonomous control arrangement 36. The autonomous control arrangement 36 may run on emergency power, such as a battery or separately powered electric generator. Personnel thus, may operate the autonomous control arrangement 36 for tilting the wind engagement unit 6.

Further, the controllable valve 34 may be adjustable between a closed and an open position e.g., for controlling the flow of hydraulic fluid through the hydraulic passage 32.

Since the wind propulsion system 4 is configured for tilting of the wind engagement unit 6 utilising the second tilt force which is generated independently of the main hydraulic control arrangement 10, the hydraulic pump of the main hydraulic control arrangement 10 is not required for tilting the wind engagement unit 6 in case the main hydraulic control arrangement 10 should malfunction.

According to some embodiments, such as the illustrated embodiments, the hydraulic passage 32 comprises or forms a flow restriction 38, the flow restriction 38 limiting a maximum flow rate of hydraulic fluid through the hydraulic passage 32 such that a hydraulic pressure in the second pressure chamber 28 produces a hydraulic force opposing the second tilt force to limit a tilting speed of the wind engagement unit 6. In this manner, the wind engagement unit 6 may be prevented from tilting at an uncontrollable speed, despite the tilting not being controlled by the main hydraulic control arrangement 10, in case the latter should malfunction.

Put differently, thus, a speed of a tilting movement of the wind engagement unit 6 effected by the second tilt force is limited.

One or more hydraulic fluid lines or conduits may be shared by the bypass arrangement 30 and the main hydraulic control arrangement 10 but hydraulic fluid flow controlling devices of the bypass arrangement 30, such as the controllable valve 34 and the flow restriction 38, are separate from hydraulic fluid flow controlling devices, such as the counter balance valve 23 and the hydraulic pump of the main hydraulic control arrangement 10.

According to some embodiments, the second tilt force may comprise a gravitational force component.

For instance, once a tilting of the wind engagement unit 6 has been initiated and a centre of gravity of the wind engagement unit 6 has been pivoted past a pivot axis, around which the wind engagement unit 6 is pivoted, gravity may be the force that tilts the wind engagement unit 6 to its inactive position.

A further alternative may be that the vessel following the waves at sea will cause the centre of gravity of the wind engagement unit 6 to be positioned on a lateral side of the pivot axis of the wind engagement unit 6, such that gravity will tilt the wind engagement unit 6.

According to some embodiments, the second tilt force may comprise an aerodynamic force component.

For instance, wind blowing against the wind engagement unit 6 may exert a force on the wind engagement unit 6 that will at least partially contribute to the tilting of the wind engagement unit 6. The wind may for instance initiate a tilting of the wind engagement unit 6, a tilting to which also gravity may contribute after an initial tilting movement.

The wind blowing against the wind engagement unit 6 may be a headwind as the vessel is traveling assisted by a further propulsion device of the vessel, such as a combustion engine driving a propeller. Alternatively, the vessel may turn into the true wind in order for the true wind to blow against the wind engagement unit 6. The headwind may also be referred to as apparent wind, i.e. the wind actually experienced by the wind engagement unit 6, and which is defined as true wind plus motion of the vessel 1 (speed, course, roll, etc.).

Alternatively, the tilting movement of the wind engagement unit 6 may be initiated through an overturning moment generated by the vessel's motion i.e., an eccentric inertial force acting on the wind engagement unit 6 due to vessel motion.

According to some embodiments, the wind propulsion system 4 may comprise a hydraulic pump 40 separate from the main hydraulic control arrangement 10, wherein the hydraulic pump 40 is configured for supplying hydraulic fluid to the first pressure chamber 26 for generating the second tilt force.

In this manner, personnel may start the hydraulic pump 40 separate from the main hydraulic control arrangement 10 to generate the second tilt force e.g., in case the main hydraulic control arrangement 10 should malfunction.

According to some embodiments, such as the illustrated embodiments, the wind engagement unit 6 comprises a main member 12 and an auxiliary member 14. The wind propulsion system 4 comprises a second hydraulic actuator 18 arranged for generating a first movement force for moving the auxiliary member 14 in relation to the main member 12. The second hydraulic actuator 18 comprises a third pressure chamber 42 for receiving hydraulic fluid to generate the first movement force and a fourth pressure chamber 44 for receiving hydraulic fluid to generate a force opposing the first movement force. The main hydraulic control arrangement 10 is configured for directing hydraulic fluid to and from the third and fourth pressure chambers 42, 44. The wind propulsion system 4 further comprises a further bypass arrangement 46 connected to the fourth pressure chamber 44, the further bypass arrangement 46 being separate from the main hydraulic control arrangement 10. The wind propulsion system 4 is configured for movement of the auxiliary member 14 in relation to the main member 12 utilising a second movement force generated independently of the main hydraulic control arrangement 10. The further bypass arrangement 46 is configured for conducting hydraulic fluid from the fourth pressure chamber 44 when moving the auxiliary member 14 utilising the second movement force. In this manner, the auxiliary member 14 may be moved in relation to the main member 12 independently of the main hydraulic control arrangement 10. Accordingly, the auxiliary member 14 may be moved in relation to the main member 12 even if the main hydraulic control arrangement 10 should malfunction.

When the first movement force is generated by the second hydraulic actuator 18 under control of the main hydraulic control arrangement 10, the main hydraulic control arrangement 10 also controls the relevant counter balance valve 24 or other corresponding load holding hydraulic arrangements for letting out hydraulic fluid from the fourth pressure chamber 44.

The direction of the first movement force is indicated with a broad arrow at the second hydraulic actuator 18. According to some embodiments, also the second movement force is in the direction of the broad arrow.

Since the further bypass arrangement 46 is separate from the main hydraulic control arrangement 10 and configured for conducting hydraulic fluid from the fourth pressure chamber 44, should the main hydraulic control arrangement 10 malfunction, hydraulic fluid can be conducted from the fourth pressure chamber 44 when the second movement force is utilised for moving the auxiliary member 14 in relation to the main member 12. The main hydraulic control arrangement 10 thus, is not required for conducting hydraulic fluid from the fourth pressure chamber 44.

Specifically, the further bypass arrangement 46 bypasses at least the counter balance valve 24 or other corresponding load holding hydraulic arrangements of the main hydraulic control arrangement 10 connected to the fourth pressure chamber 44.

For instance, if the wind engagement unit 6 comprises a wingsail 6', in order to prepare the wingsail 6' for tilting thereof, its flap 14 may be folded against its main wingsail 12. In more general terms the auxiliary member 14 may be moved in relation to the main member 12. Such moving may be achieved by the first and second movement forces. Under ordinary operating conditions, the first movement force is controlled by the main hydraulic control arrangement 10. Should the main hydraulic control arrangement 10 malfunction, the second movement force is utilised for moving the auxiliary member 14 in relation to the main member 12.

According to some embodiments, the second movement force may comprise an aerodynamic force component.

For instance, wind blowing against the auxiliary member 14 may exert a force on the auxiliary member 14 that will at least partially contribute to the folding of the auxiliary member against the main member 12. The wind may for instance initiate a folding of the auxiliary member 14, a folding to which also gravity may contribute during a tilting movement of the entire wind engagement unit 6, see further below.

The wind blowing against the wind engagement unit 6 may be a headwind as the vessel is traveling assisted by a further propulsion device of the vessel, such as a combustion engine driving a propeller. Alternatively, the wind engagement unit 6 as a whole may be pivotable about a vertical axis (not shown), such that the aerodynamic force component provided by the wind blowing at sea can be utilised for folding the auxiliary member 14 against the main member 12. A further alternative may be for the vessel to turn into the true wind in order for the true wind to blow against the auxiliary member 14 for e.g., folding it against the main member 12.

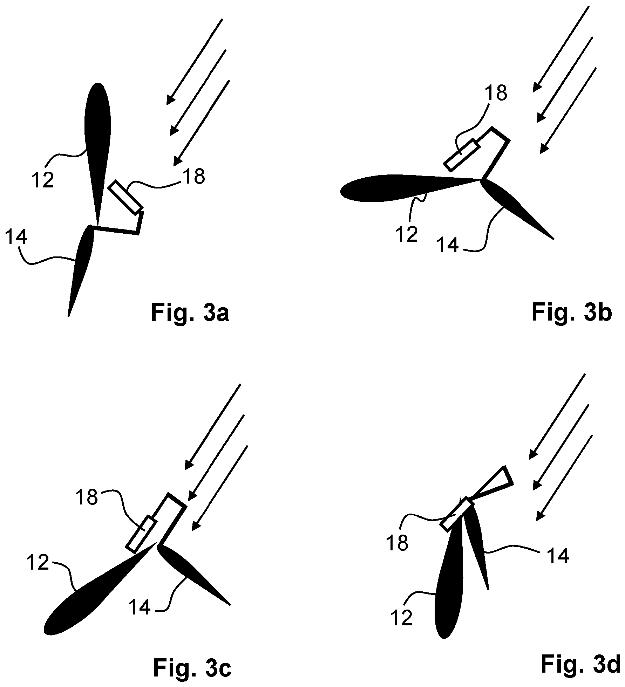

See also below with reference to **Figs. 3a** - **3d** how the second movement force comprising an aerodynamic force is utilised for folding the auxiliary member 14 against the main member 12.

According to some embodiments, the second movement force may comprise a gravitational force component.

For instance, with the auxiliary member 14 being angled towards a side of the main member 12, against which side the auxiliary member 14 is configured to fold, a partially tilted or fully tilted position of the wind engagement unit 6 will cause gravity to fold the auxiliary member 14 against the main member 12. Namely, a centre of gravity of the auxiliary member 14 will be positioned laterally of a pivot axis, about which the auxiliary member 14 is pivoted.

According to some embodiments, such as the illustrated embodiments, the further bypass arrangement 46 comprises a further hydraulic passage 48 connecting the fourth pressure chamber 44 with a tank 16 for hydraulic fluid and a further controllable valve 50 arranged in the further hydraulic passage 48, wherein the further controllable valve 50 is configured for closing and opening the further hydraulic passage 50. In this manner, the further bypass arrangement 46 may be configured for conducting hydraulic fluid from the fourth pressure chamber 44 when the auxiliary member 14 is moved in relation to the main member 12, such as folding the auxiliary member 14 against the main member 12, utilising the second movement force.

The further controllable valve 50 is controllable independently of the main hydraulic control arrangement 10.

The further controllable valve 50 may be manually controlled e.g., by turning a lever or turning a knob. Alternatively, as illustrated, the further controllable valve 50 may be controlled via the autonomous control arrangement 36. Personnel thus, may operate the autonomous control arrangement 36 for moving the auxiliary member 14 in relation to the main member 12.

Further, the further controllable valve 50 may be adjustable between a closed and an open position e.g., for controlling the flow of hydraulic fluid through the further hydraulic passage 48.

Since wind propulsion system 4 is configured for movement of the auxiliary member 14 in relation to the main member 12 utilising the second movement force generated independently of the main hydraulic control arrangement 10, the hydraulic pump of the main hydraulic control arrangement 10 is not required for moving the auxiliary member 14 in relation to the main member 12 in case the main hydraulic control arrangement 10 should malfunction.

According to some embodiments, such as the illustrated embodiments, the further hydraulic passage 48 comprises or forms a flow restriction 52, the flow restriction 52 limiting a maximum flow rate of hydraulic fluid through the further hydraulic passage 48 such that a hydraulic pressure in the fourth pressure chamber 44 produces a hydraulic force opposing the second movement force to limit a speed of movement of the auxiliary member 14. In this manner, the auxiliary member 14 may be prevented from moving at an uncontrollable speed, despite the movement of the auxiliary member 14 in relation to the main member 12 not being controlled by the main hydraulic control arrangement 10, in case the latter should malfunction.

Put differently, a speed of a movement of the auxiliary member 14 effected by the second movement force is limited.

One or more hydraulic fluid lines or conduits may be shared by the further bypass arrangement 46 and the main hydraulic control arrangement 10 but hydraulic fluid flow controlling devices of the further bypass arrangement 46, such as the further controllable valve 50 and the flow restriction 52, are separate from hydraulic fluid flow controlling devices, such as the counter balance valve 24 or other corresponding load holding hydraulic arrangements and the hydraulic pump of the main hydraulic control arrangement 10.

According to some embodiments, such as the illustrated embodiments, the bypass arrangement 30 comprises a branch-off conduit 54 connected to the third pressure chamber 42 for generating the second movement force by directing hydraulic fluid from the second pressure chamber 28 of the first hydraulic actuator 8 to the third pressure chamber 42 of the second hydraulic actuator 18. In this manner, when tilting the wind engagement unit 6 utilising the second tilt force and hydraulic fluid is conducted through the bypass arrangement 30, the hydraulic fluid may be directed to the second hydraulic actuator 18 and its third pressure chamber 42 for generating the second movement force via the second hydraulic actuator 18, independently of the main hydraulic control arrangement 10.

An additional controllable valve 56 may be arranged in the branch-off conduit 54 for directing hydraulic fluid through the branch-off conduit 54. Suitably, the branch-off conduit 54 connects to the other portions of the bypass arrangement 30 upstream of the controllable valve 34 such that the flow of hydraulic fluid through the branch-off conduit 54 is also controllable by the controllable valve 34.

The bypass arrangement 30 may be connected to the first pressure chamber 26 of the first hydraulic actuator 8. A conduit 58 may form part of a connection between the hydraulic passage 32 and the first pressure chamber 26. Thus, hydraulic fluid may be drawn from the bypass arrangement 30 into the first pressure chamber 26 when the wind engagement unit 6 is tilted utilising the second tilt force.

Similarly, the further bypass arrangement 46 may be connected to the third pressure chamber 42 of the second hydraulic actuator 18. A further conduit 60 may form part of a connection between the further hydraulic passage 48 and the third pressure chamber 42. Thus, hydraulic fluid may be drawn from the further bypass arrangement 46 into the third pressure chamber 42 when the auxiliary member 14 is moved in relation to the main member 12 utilising the second movement force.

According to some embodiments, the wind propulsion system 4 may comprise a further hydraulic pump 41 separate from the main hydraulic control arrangement 10, wherein the further hydraulic pump 41 is configured for supplying hydraulic fluid to the third pressure chamber 42 for generating the second tilt force.

In this manner, personnel may start the further hydraulic pump 41 separate from the main hydraulic control arrangement 10 to generate the second tilt force e.g., in case the main hydraulic control arrangement 10 should malfunction.

Check valves may be provided for preventing hydraulic fluid from flowing into the bypass arrangement 30 and the further bypass arrangement 46 when the main hydraulic control arrangement 10 is controlling the first and second hydraulic actuators 8, 18. For instance, as illustrated, check valves may be arranged in the branch-off conduit 54, the conduit 58, and the further conduit 60.

**Fig. 3a - 3d** schematically illustrate a top view of a wind engagement unit 6.

In **Fig. 3a - 3d** a folding sequence of an auxiliary member 14 in relation to a main member 12 of the wind engagement unit 6 is shown.

The wind engagement unit 6 may be a wingsail 6' as discussed above. Accordingly, the main member 12 may be a main wingsail 12 and the auxiliary member 14 may be a flap 14. The second hydraulic actuator 18 for moving the auxiliary member 14 in relation to the main member 12 is indicated.

A wind direction is indicated with three arrows in each of **Fig. 3a - 3d****.** In the figures it is shown how the second movement force as an aerodynamic force component may be utilised for folding the auxiliary member 14 against the main member 12.

The wind contributes to the aerodynamic force component. In the sequence of **Figs. 3a - 3d** it is illustrated how the wind will blow against the auxiliary member 14 as the wind engagement unit 6 is turned. The wind engagement unit 6 may be turned by a dedicated mechanism. Alternatively, the vessel carrying the wind engagement unit 6 may be manoeuvred such that the wind engagement unit 6 is turned in relation to the wind.

The second movement force will extend the second hydraulic member 18 until the auxiliary member 14 is folded against the main member 12.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A wind propulsion system (4) comprising a wind engagement unit (6), a first hydraulic actuator (8) arranged for generating a first tilt force for tilting the wind engagement unit (6), and a main hydraulic control arrangement (10) for controlling the first hydraulic actuator (8), wherein
the first hydraulic actuator (8) comprises a first pressure chamber (26) for receiving hydraulic fluid to generate the first tilt force and a second pressure chamber (28) for receiving hydraulic fluid to generate a force opposing the first tilt force, wherein
the main hydraulic control arrangement (10) is configured for directing hydraulic fluid to and from the first and second pressure chambers (26, 28), wherein
the wind propulsion system (4) further comprises a bypass arrangement (30) connected to the second pressure chamber (28), the bypass arrangement (30) being separate from the main hydraulic control arrangement (10), wherein
the wind propulsion system (4) is configured for tilting of the wind engagement unit (6) utilising a second tilt force which is generated independently of the main hydraulic control arrangement (10), and wherein
the bypass arrangement (30) is configured for conducting hydraulic fluid from the second pressure chamber (28) when tilting the wind engagement unit (6) utilising the second tilt force.

2. The wind propulsion system (4) according to claim 1, wherein the bypass arrangement (30) comprises a hydraulic passage (32) connecting the second pressure chamber (28) with a tank (16) for hydraulic fluid and a controllable valve (34) arranged in the hydraulic passage (32), wherein the controllable valve (34) is configured for closing and opening the hydraulic passage (32).

3. The wind propulsion system (4) according to claim 2, wherein the hydraulic passage (32) comprises or forms a flow restriction (38), the flow restriction (38) limiting a maximum flow rate of hydraulic fluid through the hydraulic passage (32) such that a hydraulic pressure in the second pressure chamber (28) produces a hydraulic force opposing the second tilt force to limit a tilting speed of the wind engagement unit (6).

4. The wind propulsion system (4) according to any one of the preceding claims, wherein the wind engagement unit (6) comprises a main member (12) and an auxiliary member (14), wherein
the wind propulsion system (4) comprises a second hydraulic actuator (18) arranged for generating a first movement force for moving the auxiliary member (14) in relation to the main member (12), wherein
the second hydraulic actuator (18) comprises a third pressure chamber (42) for receiving hydraulic fluid to generate the first movement force and a fourth pressure chamber (44) for receiving hydraulic fluid to generate a force opposing the first movement force, wherein
the main hydraulic control arrangement (10) is configured for directing hydraulic fluid to and from the third and fourth pressure chambers (42, 44), wherein
the wind propulsion system (4) further comprises a further bypass arrangement (46) connected to the fourth pressure chamber (44), the further bypass arrangement (46) being separate from the main hydraulic control arrangement (10), and wherein
the wind propulsion system (4) is configured for movement of the auxiliary member (14) in relation to the main member (12) utilising a second movement force generated independently of the main hydraulic control arrangement (10), and wherein
the further bypass arrangement (46) is configured for conducting hydraulic fluid from the fourth pressure chamber (44) when moving the auxiliary member (14) utilising the second movement force.

5. The wind propulsion system (4) according to claim 4, wherein the further bypass arrangement (46) comprises a further hydraulic passage (48) connecting the fourth pressure chamber (44) with a tank (16) for hydraulic fluid and a further controllable valve (50) arranged in the further hydraulic passage (48), wherein the further controllable valve (50) is configured for closing and opening the further hydraulic passage (48).

6. The wind propulsion system (4) according to claim 5, wherein the further hydraulic passage (48) comprises or forms a flow restriction (52), the flow restriction (52) limiting a maximum flow rate of hydraulic fluid through the further hydraulic passage (48) such that a hydraulic pressure in the fourth pressure chamber (44) produces a hydraulic force opposing the second movement force to limit a speed of movement of the auxiliary member (14).

7. The wind propulsion system (4) according to any one of claims 4 - 6, wherein the bypass arrangement (30) comprises a branch-off conduit (54) connected to the third pressure chamber (42) for generating the second movement force by directing hydraulic fluid from the second pressure chamber (28) of the first hydraulic actuator (8) to the third pressure chamber (42) of the second hydraulic actuator (18).

8. The wind propulsion system (4) according to any one of claims 4 - 7, wherein the second movement force comprises an aerodynamic force component.

9. The wind propulsion system (4) according to any one of claims 4 - 8, wherein the second movement force comprises a gravitational force component.

10. The wind propulsion system (4) according to any one of the preceding claims, wherein the second tilt force comprises a gravitational force component.

11. The wind propulsion system (4) according to any one of the preceding claims, wherein the second tilt force comprises an aerodynamic force component.

12. The wind propulsion system (4) according to any one of the preceding claims, comprising a hydraulic pump (40) separate from the main hydraulic control arrangement (10), wherein
the hydraulic pump (40) is configured for supplying hydraulic fluid to the first pressure chamber (26) for generating the second tilt force.

13. The wind propulsion system (4) according to any one of claims 4 - 9, comprising a further hydraulic pump (41) separate from the main hydraulic control arrangement (10), wherein
the further hydraulic pump (41) is configured for supplying hydraulic fluid to the third pressure chamber (42) for generating the second movement force.

14. The wind propulsion system (4) according to any one of the preceding claims, wherein the wind engagement unit (6) comprises or consists of a wingsail (6'), a rotor sail, a turbo sail, or similar device.

15. A marine vessel (2) comprising a wind propulsion system (4) according to any one of the preceding claims.

## Patentansprüche

1. Windantriebssystem (4), umfassend eine Windangriffseinheit (6), eine erste hydraulische Betätigungsvorrichtung (8), welche zum Erzeugen einer ersten Kippkraft zum Kippen der Windangriffseinheit (6) angeordnet ist, und eine hydraulische Hauptsteueranordnung (10) zum Steuern der ersten hydraulischen Betätigungsvorrichtung (8), wobei
die erste hydraulische Betätigungsvorrichtung (8) eine erste Druckkammer (26) zum Aufnehmen von Hydraulikflüssigkeit zum Erzeugen der ersten Kippkraft und eine zweite Druckkammer (28) zum Aufnehmen von Hydraulikflüssigkeit zum Erzeugen einer der ersten Kippkraft entgegengesetzten Kraft umfasst, wobei
die hydraulische Hauptsteueranordnung (10) zum Leiten von Hydraulikflüssigkeit zu und von der ersten und zweiten Druckkammer (26, 28) konfiguriert ist, wobei
das Windantriebssystem (4) weiter eine Bypass-Anordnung (30) umfasst, welche mit der zweiten Druckkammer (28) verbunden ist, wobei die Bypass-Anordnung (30) von der hydraulischen Hauptsteueranordnung (10) getrennt ist, wobei
das Windantriebssystem (4) zum Kippen der Windangriffseinheit (6) unter Verwendung einer zweiten Kippkraft konfiguriert ist, welche unabhängig von der hydraulischen Hauptsteueranordnung (10) erzeugt wird, und wobei
die Bypass-Anordnung (30) dazu konfiguriert ist, Hydraulikflüssigkeit aus der zweiten Druckkammer (28) zu führen, wenn die Windangriffseinheit (6) unter Verwendung der zweiten Kippkraft gekippt wird.

2. Windantriebssystem (4) nach Anspruch 1, wobei die Bypass-Anordnung (30) einen Hydraulikkanal (32), welcher die zweite Druckkammer (28) mit einem Tank (16) für Hydraulikflüssigkeit verbindet, und ein steuerbares Ventil (34) umfasst, welches in dem Hydraulikkanal (32) angeordnet ist, wobei das steuerbare Ventil (34) zum Schließen und Öffnen des Hydraulikkanals (32) konfiguriert ist.

3. Windantriebssystem (4) nach Anspruch 2, wobei der Hydraulikkanal (32) eine Durchflussbeschränkung (38) umfasst oder bildet, wobei die Durchflussbeschränkung (38) eine maximale Durchflussrate von Hydraulikflüssigkeit durch den Hydraulikkanal (32) begrenzt, sodass ein Hydraulikdruck in der zweiten Druckkammer (28) eine hydraulische Kraft erzeugt, welche der zweiten Kippkraft entgegengesetzt ist, um eine Kippgeschwindigkeit der Windangriffseinheit (6) zu begrenzen.

4. Windantriebssystem (4) nach einem der vorstehenden Ansprüche, wobei die Windangriffseinheit (6) ein Hauptelement (12) und ein Hilfselement (14) umfasst, wobei
das Windantriebssystem (4) eine zweite hydraulische Betätigungsvorrichtung (18) umfasst, welche zum Erzeugen einer ersten Bewegungskraft zum Bewegen des Hilfselements (14) in Bezug auf das Hauptelement (12) angeordnet ist, wobei
die zweite hydraulische Betätigungsvorrichtung (18) eine dritte Druckkammer (42) zum Aufnehmen von Hydraulikflüssigkeit zum Erzeugen der ersten Bewegungskraft und eine vierte Druckkammer (44) zum Aufnehmen von Hydraulikflüssigkeit zum Erzeugen einer der ersten Bewegungskraft entgegengesetzten Kraft umfasst, wobei
die hydraulische Hauptsteueranordnung (10) zum Leiten von Hydraulikflüssigkeit zu und von der dritten und vierten Druckkammer (42, 44) konfiguriert ist, wobei
das Windantriebssystem (4) weiter eine weitere Bypass-Anordnung (46) umfasst, welche mit der vierten Druckkammer (44) verbunden ist, wobei die weitere Bypass-Anordnung (46) von der hydraulischen Hauptsteueranordnung (10) getrennt ist, und wobei
das Windantriebssystem (4) zur Bewegung des Hilfselements (14) in Bezug auf das Hauptelement (12) unter Verwendung einer zweiten Bewegungskraft konfiguriert ist, welche unabhängig von der hydraulischen Hauptsteueranordnung (10) erzeugt wird, und wobei
die weitere Bypass-Anordnung (46) dazu konfiguriert ist, Hydraulikflüssigkeit aus der vierten Druckkammer (44) zu führen, wenn das Hilfselement (14) unter Verwendung der zweiten Bewegungskraft bewegt wird.

5. Windantriebssystem (4) nach Anspruch 4, wobei die weitere Bypass-Anordnung (46) einen weiteren Hydraulikkanal (48), welcher die vierte Druckkammer (44) mit einem Tank (16) für Hydraulikflüssigkeit verbindet, und ein weiteres steuerbares Ventil (50) umfasst, welches in dem weiteren Hydraulikkanal (48) angeordnet ist, wobei das weitere steuerbare Ventil (50) zum Schließen und Öffnen des weiteren Hydraulikkanals (48) konfiguriert ist.

6. Windantriebssystem (4) nach Anspruch 5, wobei der weitere Hydraulikkanal (48) eine Durchflussbeschränkung (52) umfasst oder bildet, wobei die Durchflussbeschränkung (52) eine maximale Durchflussrate von Hydraulikflüssigkeit durch den weiteren Hydraulikkanal (48) begrenzt, sodass ein Hydraulikdruck in der vierten Druckkammer (44) eine hydraulische Kraft erzeugt, welche der zweiten Bewegungskraft entgegengesetzt ist, um eine Bewegungsgeschwindigkeit des Hilfselements (14) zu begrenzen.

7. Windantriebssystem (4) nach einem der Ansprüche 4-6, wobei die Bypass-Anordnung (30) eine Abzweigleitung (54) umfasst, welche mit der dritten Druckkammer (42) verbunden ist, um die zweite Bewegungskraft zu erzeugen, indem Hydraulikflüssigkeit von der zweiten Druckkammer (28) der ersten hydraulischen Betätigungsvorrichtung (8) zu der dritten Druckkammer (42) der zweiten hydraulischen Betätigungsvorrichtung (18) geleitet wird.

8. Windantriebssystem (4) nach einem der Ansprüche 4-7, wobei die zweite Bewegungskraft eine aerodynamische Kraftkomponente umfasst.

9. Windantriebssystem (4) nach einem der Ansprüche 4-8, wobei die zweite Bewegungskraft eine aerodynamische Gewichtskraftkomponente umfasst.

10. Windantriebssystem (4) nach einem der vorstehenden Ansprüche, wobei die zweite Kippkraft eine aerodynamische Gewichtskraftkomponente umfasst.

11. Windantriebssystem (4) nach einem der vorstehenden Ansprüche, wobei die zweite Kippkraft eine aerodynamische Kraftkomponente umfasst.

12. Windantriebssystem (4) nach einem der vorstehenden Ansprüche, umfassend eine Hydraulikpumpe (40), welche von der hydraulischen Hauptsteueranordnung (10) getrennt ist, wobei
die Hydraulikpumpe (40) dazu konfiguriert ist, Hydraulikflüssigkeit in die erste Druckkammer (26) zuzuführen, um die zweite Kippkraft zu erzeugen.

13. Windantriebssystem (4) nach einem der Ansprüche 4-9, umfassend eine weitere Hydraulikpumpe (41), welche von der hydraulischen Hauptsteueranordnung (10) getrennt ist, wobei
die weitere Hydraulikpumpe (41) dazu konfiguriert ist, Hydraulikflüssigkeit in die dritte Druckkammer (42) zuzuführen, um die zweite Bewegungskraft zu erzeugen.

14. Windantriebssystem (4) nach einem der vorstehenden Ansprüche, wobei die Windangriffseinheit (6) ein Flügelsegel (6'), ein Rotorsegel, ein Turbosegel oder eine ähnliche Vorrichtung umfasst oder daraus besteht.

15. Wasserfahrzeug (2), umfassend ein Windantriebssystem (4) nach einem der vorstehenden Ansprüche.

## Revendications

1. Système de propulsion éolienne (4) comprenant une unité de prise au vent (6), un premier actionneur hydraulique (8) agencé pour générer une première force d'inclinaison pour incliner l'unité de prise au vent (6), et un agencement de commande hydraulique principal (10) pour commander le premier actionneur hydraulique (8), dans lequel
le premier actionneur hydraulique (8) comprend une première chambre de pression (26) pour recevoir un fluide hydraulique pour générer la première force d'inclinaison et une deuxième chambre de pression (28) pour recevoir un fluide hydraulique pour générer une force opposée à la première force d'inclinaison, dans lequel
l'agencement de commande hydraulique principal (10) est configuré pour diriger un fluide hydraulique vers, et depuis, les première et deuxième chambres de pression (26, 28), dans lequel
le système de propulsion éolienne (4) comprend en outre un agencement de dérivation (30) relié à la deuxième chambre de pression (28), l'agencement de dérivation (30) étant séparé de l'agencement de commande hydraulique principal (10), dans lequel
le système de propulsion éolienne (4) est configuré pour incliner l'unité de prise au vent (6) à l'aide d'une seconde force d'inclinaison qui est générée indépendamment de l'agencement de commande hydraulique principal (10), et dans lequel
l'agencement de dérivation (30) est configuré pour conduire un fluide hydraulique depuis la deuxième chambre de pression (28) lors de l'inclinaison de l'unité de prise au vent (6) à l'aide de la seconde force d'inclinaison.

2. Système de propulsion éolienne (4) selon la revendication 1, dans lequel l'agencement de dérivation (30) comprend un passage hydraulique (32) reliant la deuxième chambre de pression (28) à un réservoir (16) pour un fluide hydraulique et une vanne commandable (34) agencée dans le passage hydraulique (32), dans lequel la vanne commandable (34) est configurée pour fermer et ouvrir le passage hydraulique (32).

3. Système de propulsion éolienne (4) selon la revendication 2, dans lequel le passage hydraulique (32) comprend, ou forme, une restriction d'écoulement (38), la restriction d'écoulement (38) limitant un débit maximal d'un fluide hydraulique à travers le passage hydraulique (32) de telle sorte qu'une pression hydraulique dans la deuxième chambre de pression (28) produise une force hydraulique s'opposant à la seconde force d'inclinaison pour limiter une vitesse d'inclinaison de l'unité de prise au vent (6).

4. Système de propulsion éolienne (4) selon l'une quelconque des revendications précédentes, dans lequel l'unité de prise au vent (6) comprend un élément principal (12) et un élément auxiliaire (14), dans lequel
le système de propulsion éolienne (4) comprend un second actionneur hydraulique (18) agencé pour générer une première force de mouvement pour déplacer l'élément auxiliaire (14) par rapport à l'élément principal (12), dans lequel
le second actionneur hydraulique (18) comprend une troisième chambre de pression (42) pour recevoir un fluide hydraulique pour générer la première force de mouvement et une quatrième chambre de pression (44) pour recevoir un fluide hydraulique pour générer une force s'opposant à la première force de mouvement, dans lequel
l'agencement de commande hydraulique principal (10) est configuré pour diriger un fluide hydraulique vers, et depuis, les troisième et quatrième chambres de pression (42, 44), dans lequel
le système de propulsion éolienne (4) comprend en outre un agencement de dérivation supplémentaire (46) relié à la quatrième chambre de pression (44), l'agencement de dérivation supplémentaire (46) étant séparé de l'agencement de commande hydraulique principal (10), et dans lequel
le système de propulsion éolienne (4) est configuré pour le mouvement de l'élément auxiliaire (14) par rapport à l'élément principal (12) à l'aide d'une seconde force de mouvement générée indépendamment de l'agencement de commande hydraulique principal (10), et dans lequel
l'agencement de dérivation supplémentaire (46) est configuré pour conduire un fluide hydraulique depuis la quatrième chambre de pression (44) lors du déplacement de l'élément auxiliaire (14) à l'aide de la seconde force de mouvement.

5. Système de propulsion éolienne (4) selon la revendication 4, dans lequel l'agencement de dérivation supplémentaire (46) comprend un passage hydraulique supplémentaire (48) reliant la quatrième chambre de pression (44) à un réservoir (16) pour un fluide hydraulique et une vanne commandable supplémentaire (50) agencée dans le passage hydraulique supplémentaire (48), dans lequel la vanne commandable supplémentaire (50) est configurée pour fermer et ouvrir le passage hydraulique supplémentaire(48).

6. Système de propulsion éolienne (4) selon la revendication 5, dans lequel le passage hydraulique supplémentaire (48) comprend, ou forme, une restriction d'écoulement (52), la restriction d'écoulement (52) limitant un débit maximal d'un fluide hydraulique à travers le passage hydraulique supplémentaire (48) de telle sorte qu'une pression hydraulique dans la quatrième chambre de pression (44) produise une force hydraulique s'opposant à la seconde force de mouvement pour limiter une vitesse de mouvement de l'élément auxiliaire (14).

7. Système de propulsion éolienne (4) selon l'une quelconque des revendications 4 - 6, dans lequel l'agencement de dérivation (30) comprend un conduit d'embranchement (54) relié à la troisième chambre de pression (42) pour générer la seconde force de mouvement en dirigeant un fluide hydraulique de la deuxième chambre de pression (28) du premier actionneur hydraulique (8) vers la troisième chambre de pression (42) du second actionneur hydraulique (18).

8. Système de propulsion éolienne (4) selon l'une quelconque des revendications 4 - 7, dans lequel la seconde force de mouvement comprend une composante de force aérodynamique.

9. Système de propulsion éolienne (4) selon l'une quelconque des revendications 4 - 8, dans lequel la seconde force de mouvement comprend une composante de force gravitationnelle.

10. Système de propulsion éolienne (4) selon l'une quelconque des revendications précédentes, dans lequel la seconde force d'inclinaison comprend une composante de force gravitationnelle.

11. Système de propulsion éolienne (4) selon l'une quelconque des revendications précédentes, dans lequel la seconde force d'inclinaison comprend une composante de force aérodynamique.

12. Système de propulsion éolienne (4) selon l'une quelconque des revendications précédentes, comprenant une pompe hydraulique (40) séparée de l'agencement de commande hydraulique principal (10), dans lequel
la pompe hydraulique (40) est configurée pour fournir un fluide hydraulique à la première chambre de pression (26) pour générer la seconde force d'inclinaison.

13. Système de propulsion éolienne (4) selon l'une quelconque des revendications 4 - 9, comprenant une pompe hydraulique supplémentaire (41) séparée de l'agencement de commande hydraulique principal (10), dans lequel
la pompe hydraulique supplémentaire (41) est configurée pour fournir un fluide hydraulique à la troisième chambre de pression (42) pour générer la seconde force de mouvement.

14. Système de propulsion éolienne (4) selon l'une quelconque des revendications précédentes, dans lequel l'unité de prise au vent (6) comprend ou est composée d'une voile d'aile (6'), d'une voile de rotor, d'une voile turbo ou d'un dispositif similaire.

15. Vaisseau marin (2) comprenant un système de propulsion éolienne (4) selon l'une quelconque des revendications précédentes.
